# EUROPÄISCHE PATENTANMELDUNG

(11) **EP 0 651 186 A1**
(43) Veröffentlichungstag der Anmeldung: **03.05.1995**
(21) Anmeldenummer: 94114658.1
(22) Anmeldetag: 17.09.1994
(51) Int. Cl.: F16J 1/14

(54) **Kolben-Pleuel-Einheit**

(30) Priorität: 03.11.1993 DE 4337473
(71) Anmelder: AE GOETZE GmbH, D-51399 Burscheid (DE)
(72) Erfinder: Klaus, Junge, Prof., D-51399 Burscheid (DE)

(57) **Zusammenfassung**

Die Erfindung betrifft eine Kolben-Pleuel-Einheit (1) für Brennkraftmaschinen. Der Kolben weist am Kolbenboden (4) eine Pleuellagerstelle (5) zur Aufnahme eines fest mit dem Pleuel (8) verbundenen Zapfens (7) auf. Durch gekröpfte Ausbildung des Pleuelkopfes (9) können Pleuel (8) und Kolben (1) leicht miteinander verbunden werden.

## Beschreibung

Die Erfindung betrifft eine Kolben-Pleuel-Einheit, insbesondere für Brennkraftmaschinen, wobei am Pleuelkopf ein fest mit dem Pleuel verbundener Zapfen angeordnet ist, der in einer zentrisch am Kolbenboden angeordneten Lagerstelle etwa in Höhe der am Kolbenhemd vorgesehenen Kompressionskolbenringe gehalten ist.

Aus dem Stand der Technik sind zahlreiche Konstruktionen zu entnehmen, bei denen der Kolben im Kolbenhemd zwei Kolbenaugen aufweist, durch die sich ein Kolbenbolzen erstreckt, wobei der Kolbenbolzen das Pleuelauge des Pleuels durchsetzt. Bei derartigen Kolben ist es nicht möglich, den Kolbenbolzen axial so weit in Richtung des Kolbenbodens zu versetzen, daß der Kolbenbolzen radial hinter einer Kolbenringnut liegt, denn dann verliefen die Bohrungen beziehungsweise die Kolbenaugen durch die Kolbenringnuten mit der Folge, daß die Dichtfunktion der eingelegten Kolbenringe nicht mehr gewährleistet ist.

Zur Vermeidung dieses Problemes ist es bekannt, Kolben aus mehreren Einzelteilen zusammenzusetzen. Die DE 32 35 220 A1 offenbart einen Kolben mit einem als Kolbenboden und Kolbenhemd ausgebildeten ersten Teil und einem inneren, eine Anlenkstelle für ein Pleuel bildenden zweiten Teil. Das zweite Teil weist zwei zylindrische, senkrecht zur Kolbenachse verlaufende Bohrungen auf, die als Lager für einen Kolbenbolzen oder Zapfen dienen. Zur Montage wird zunächst das zweite Teil mit dem Pleuel verbunden und anschließend an dem Kolbenboden unter Verwendung von Schrauben befestigt. Insgesamt müssen auf diese Weise mehrere Einzelteile gefertigt, zusammengestellt, zusammengefügt und miteinander verschraubt werden.

Der Erfindung liegt die Aufgabe zugrunde, einen gattungsgemäßen Kolben im Hinblick auf die Anzahl der Einzelteile zu reduzieren, wobei gleichzeitig eine leichtere Montage der Einzelteile angestrebt wird, ohne daß die Bauhöhe des Kolbens sich vergrößert.

Diese Aufgabe wird erfindungsgemäß dadurch gelöst, daß der Pleuelkopf gekröpft ausgebildet ist und der Zapfen entgegen der Kröpfrichtung einseitig aus dem Pleuel kragt.

Auf diese Weise ist es möglich, die Pleuellagerstelle einstückig aus dem Kolben herauszuformen. Das Pleuel kann durch einfaches Einstecken in die Pleuellagerstelle mit dem Kolben verbunden werden, ohne daß zusätzliche Verbindungselemente, zum Beispiel Schrauben, notwendig sind. Somit reduziert sich das System auf zwei Einzelteile, deren Montage auf einfache Weise automatisiert werden kann. Vorzugsweise ist der Pleuelkopf derart gekröpft, daß die auf den Zapfen wirkende resultierende Kraft durch die Mitte des Zapfens verläuft und die Wirklinie der Kraft mit der Mittellinie des nicht gekröpften Pleuelbereiches fluchtet. Überdies kann der Zapfen einstückig an das Pleuel angeformt sein.

Einem weiteren Gedanken der Erfindung gemäß, ist der Pleuelkopf als Stützlager ausgebildet und stützt sich axial am Kolbenboden ab. Somit ergibt sich eine unmittelbare Kraftübertragung vom Kolben auf das Pleuel, ohne daß der Zapfen auf Biegung beansprucht wird. Die auf den Zapfen und das Stützlager wirkende Kraft wird durch geeignete Kröpfung des Pleuelkopfes durch die Kolbenmitte geleitet, wobei die Wirklinie der Kraft mit der Mittellinie des nicht gekröpften Pleuelbereiches fluchtet. Zur besseren Schmierung der Pleuellagerstelle sind die Seitenflächen des Zapfens abgeflacht ausgebildet.

Die Erfindung ist in der Zeichnung anhand eines Ausführungsbeispieles dargestellt und wird im folgenden näher erläutert. Es zeigen:
Figur 1 einen Längsschnitt durch eine erfindungsgemäße Kolben-Pleuel-Einheit
Figur 2 einen Ausschnitt gemäß Schnittlinie II-II nach Figur 1
Figur 3 einen Ausschnitt gemäß Schnittlinie III-III nach Figur 1

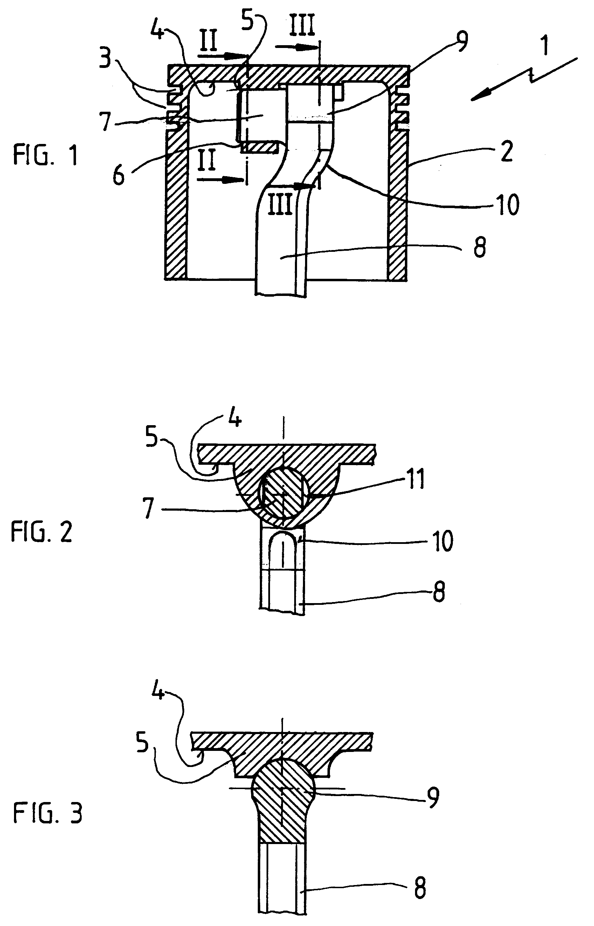

Die Figur 1 zeigt eine erfindungsgemäße Kolben-Pleuel-Einheit (1) für Brennkraftmaschinen. Der Kolben (1) ist einteilig ausgeführt. Im Kolbenhemd (2) sind mehrere Kolbenringnuten (3) vorgesehen. Am Kolbenboden (4) ist eine Pleuellagerstelle (5) angeordnet, die keinen Kontakt zum Kolbenhemd (2) besitzt. Die Pleuellagerstelle weist eine radial gerichtete Bohrung (8) auf, durch die sich ein Zapfen (7) eines Pleuels (8) erstreckt. Zapfen (7) und Pleuel (8) sind aus einem Stück gefertigt. Der Pleuelkopf (9) des Pleuels (8) ist gekröpft (10) ausgebildet und stützt sich axial am Kolbenboden (4) innerhalb der Pleuellagerstelle (5) ab.

Zum Einbau des Pleuels (8) wird dieses axial in den Kolben (1) eingeführt derart, daß der Zapfen (7) zunächst radial neben der Bohrung (6) liegt, um anschließend durch radiales Verschieben des Pleuels (8) in die Bohrung (6) einzutauchen. Auf diese Weise sind Pleuel (8) und Kolben (1) miteinander verhakt.

Die Figur 2 zeigt die Anordnung des Zapfens (7) in der Pleuellagerstelle (5). Die Seitenflächen (11) des Bolzens (7) sind abgeflacht ausgebildet, um eine bessere Schmierung zu gewährleisten.

Wie aus der Figur 3 zu erkennen, erstreckt sich der Pleuelkopf (9) des Pleuels (8) als Stützlager am Kolbenboden (4).

## Patentansprüche

1. Kolben-Pleuel-Einheit, insbesondere für Brennkraftmaschinen, wobei am Pleulkopf ein fest mit dem Pleuel verbundener Zapfen angeordnet ist, der in einer zentrisch am Kolbenboden angeordneten Lagerstelle etwa in Höhe der am Kolbenhemd vorgesehenen Kompressionskolbenringe gehalten ist, dadurch gekennzeichnet, daß der Pleuelkopf (9) gekröpft ausgebildet ist und der Zapfen (7) entgegen der Kröpfrichtung einseitig aus dem Pleuel (8) kragt.

2. Kolben-Pleuel-Einheit nach Anspruch 1, dadurch gekennzeichnet, daß der Pleuelkopf (9) derart gekröpft ist, daß die auf den Zapfen (7) wirkende resultierende Kraft durch die Mitte des Zapfens (7) verläuft und die Wirklinie der Kraft mit der Mittellinie des nicht gekröpften Pleuelbereiches fluchtet.

3. Kolben-Pleuel-Einheit nach den Ansprüchen 1 und 2, dadurch gekennzeichnet, daß der Zapfen (7) einstückig an das Pleuel (8) angeformt ist.

4. Kolben-Pleuel-Einheit nach mindestens einem der Ansprüche 1 bis 3, dadurch gekennzeichnet, daß der Pleuelkopf (9) als Stützlager ausgebildet ist und sich am Kolbenboden (4) axial abstützt.

5. Kolben-Pleuel-Einheit nach mindestens einem der Ansprüche 1 bis 4, dadurch gekennzeichnet, daß die Kröpfung derart ausgebildet ist, daß die auf den Zapfen (7) und das Stützlager wirkende resultierende Kraft durch die Kolbenmitte verläuft und die Wirklinie der Kraft mit der Mittellinie des nicht gekröpften Pleuelbereiches fluchtet.

6. Kolben-Pleuel-Einheit nach den Ansprüchen 1 bis 5, dadurch gekennzeichnet, daß die Seitenflächen (11) des Zapfens (7) abgeflacht ausgebildet sind.
